# EUROPÄISCHE PATENTSCHRIFT

(11) **EP 1 186 199 B1**
(45) Veröffentlichungstag und Bekanntmachung des Hinweises auf die Patenterteilung: **11.03.2009**
(21) Anmeldenummer: 00941919.3
(22) Anmeldetag: 23.05.2000
(51) Int. Cl.: H04Q 11/04

(54) **VERFAHREN UND EINRICHTUNG ZUM ÜBERMITTELN VON DATEN**
METHOD AND DEVICE FOR TRANSMITTING DATA
PROCEDE ET DISPOSITIF POUR LA TRANSMISSION DE DONNEES

(30) Priorität: 15.06.1999 DE 19927304
(43) Veröffentlichungstag der Anmeldung: 13.03.2002
(73) Patentinhaber: SIEMENS AKTIENGESELLSCHAFT, 80333 München (DE)
(72) Erfinder: TIETSCH, Michael, D-86916 Kaufering (DE)
(86) Internationale Anmeldenummer: PCT/DE2000/001650
(87) Internationale Veröffentlichungsnummer: WO 2000/078087

(56) Entgegenhaltungen:
- EP-A- 0 473 066
- US-A- 5 430 727

## Beschreibung

Die Erfindung betrifft ein Verfahren zum Übermitteln von Daten von einer Ursprungs-Netzwerkeinrichtung zu einer Ziel-Netzwerkeinrichtung. Außerdem betrifft die Erfindung eine Adreß-Umsetzeinrichtung zur Realisierung des Verfahrens. Als Netzwerkeinrichtungen können in diesem Zusammenhang Netzknoten eines Kommunikations- und/oder Datennetzes, Routereinrichtungen, Netzwerkbaugruppen, vernetzte Personalcomputer und andere an ein Netzwerk koppelbare Kommunikations- und Datenverarbeitungseinrichtungen verstanden werden.

Zur schnellen Vermittlung von Daten innerhalb eines Netzwerkes werden die Daten häufig in Form von Datenpaketen übermittelt, die mit einer Hardware-Adresse als Zieladresse versehen sind. Hardware-Adressen, die auch als MAC-Adressen (medium access control) bezeichnet werden, sind in der Sicherungsschicht (Schicht 2) des OSI-Referenzmodells verwendete Adressen mit denen Netzwerkeinrichtungen - meist Netzwerkbaugruppen - herstellerseitig versehen sind. Die Hardware-Adresse einer Netzwerkeinrichtung ist fest, d.h. unveränderbar, in diese eingespeichert und weltweit eindeutig.

Eine hardwareadressenorientierte Vermittlung von Datenpaketen ist insbesondere in lokalen Netzen - sogenannten LANs (local area network) - üblich. Ein mit einer Hardware-Adresse einer Ziel-Netzwerkeinrichtung versehenes und in ein LAN gesendetes Datenpaket wird von der betreffenden Ziel-Netzwerkeinrichtung anhand der Hardware-Adresse als an sich adressiert erkannt und infolgedessen zur Weiterverarbeitung oder Weiterleitung empfangen. In der Regel werden Hardware-Adressen nur zur Adressierung von Netzwerkeinrichtungen innerhalb eines lokalen Netzes verwendet. Liegt ein Übermittlungsziel außerhalb des lokalen Netzes, werden die Datenpakete im allgemeinen zu einer Routereinrichtung des lokalen Netzes transportiert, die die Datenpakete anhand einer darin zusätzlich enthaltenen, das Übermittlungsziel identifizierenden Netzwerkadresse weitervermittelt. Eine Netzwerkadresse ist im Unterschied zu einer Hardware-Adresse oberhalb der Sicherungsschicht angesiedelt und kann einer Netzwerkeinrichtung per Systemadministration reversibel zugewiesen werden. Als Netzwerkadressen werden häufig sogenannte Internet-Protokoll-Adressen, im folgenden auch als IP-Adressen bezeichnet, verwendet. In der Routereinrichtung wird die Netzwerkadresse der Datenpakete ausgewertet und abhängig davon eine Adreßinformation bestimmt, die eine in der Routereinrichtung registrierte, dem Übermittlungsziel möglichst nahegelegene oder gegebenenfalls mit diesem identische Ziel-Netzwerkeinrichtung identifiziert. Die Datenpakete werden daraufhin anhand der Adreßinformation zu dieser Ziel-Netzwerkeinrichtung übertragen. Falls diese nicht mit dem endgültigen Übermittlungsziel übereinstimmt, ist diese Ziel-Netzwerkeinrichtung für die Weitervermittlung der Datenpakete in Richtung des Übermittlungsziels zuständig.

Ein Verfahren zum Übertragen von Datenpaketen in einer heterogenen Netzumgebung mit unterschiedlichen Routingalgorithmen ist aus dem Dokument US 5430727 bekannt. Insbesondere ist daraus eine Einrichtung bekannt, die hinsichtlich eines ersten Protokolls als Router und hinsichtlich eines zweiten Protokolls als Brücke fungiert.

Aus dem Dokument EP 473066 A1 ist bekannt, lokale Netze über ein ATM-Netz (ATM: Asychronous Transfer Mode) zu koppeln, wobei die lokalen Netze jeweils über eine Brücke an das ATM-Netz angeschlossen sind. Dabei enthält jede der Brücken, über die ein jeweiliges lokales Netz an das ATM-Netz angeschlossen ist, eine Adreßtabelle, in der MAC-Adressen von Endgeräten der jeweiligen anderen lokalen Netze jeweils einer vorab aufgebauten ATM-Verbindung zu dem betreffenden anderen lokalen Netz zugeordnet sind. Aufgrund dieser Zuordnung kann ein Datenpaket anhand einer MAC-Zieladresse über die dieser zugeordnete ATM-Verbindung zwischen den lokalen Netzen übertragen werden. Ein Nachteil dieser Übertragungstechnik besteht jedoch darin, dass bei jeder Änderung einer MAC-Adresse eines Endgerätes, z.B. bei Austausch einer Netzwerkkarte, in einem beliebigen der angeschlossenen lokalen Netze die Adreßtabellen aller Brücken zu aktualisieren sind. Dies bedingt in der Regel einen sehr hohen Administrationsaufwand.

Ein Verfahren durch das mit einer IP-Adresse versehene Datenpakete transparent über ein ATM-Netz (ATM: asynchronous transfer mode) zu einem an das ATM-Netz gekoppelten, durch die IP-Adresse identifizierten Übermittlungsziel übertragen werden können, ist beispielsweise unter der Bezeichnung IpoA (IP over ATM) bekannt. Dabei bestimmt eine Routereinrichtung anhand der IP-Adresse der Datenpakete die ATM-Adresse eines dem Übermittlungsziel möglichst nahegelegenen ATM-Austrittsnetzknotens, mittels der die Datenpakete im ATM-Netz weitergeleitet werden. Aspekte dieses Verfahren sind z.B. in der Internet-Spezifikation RFC 2225 beschrieben.

Die bei solchen Verfahren erforderliche Auswertung von IP-Adressen zur Leitwegbestimmung ist allerdings ein verhältnismäßig aufwendiger Vorgang, der sich im allgemeinen nur mit hohem Schaltungsaufwand realisieren läßt.

Es ist Aufgabe der vorliegenden Erfindung ein Verfahren zum Übermitteln von Daten von einer Ursprungs-Netzwerkeinrichtung zu mindestens einer Ziel-Netzwerkeinrichtung anzugeben, das eine weniger aufwendige Adreßauswertung erfordert. Außerdem ist eine Adreß-Umsetzeinrichtung zur Realisierung des Verfahrens anzugeben.

Gelöst wird diese Aufgabe durch ein Verfahren mit den Merkmalen des Patentanspruchs 1 und durch eine Adreß-Umsetzeinrichtung mit den Merkmalen des Patentanspruchs 10.

Durch das erfindungsgemäße Verfahren werden Daten anhand einer diesen in einer Ursprungs-Netzwerkeinrichtung als Zieladresse zugeordneten fiktiven Hardware-Adresse, von der Ursprungs-Netzwerkeinrichtung zu einer Ziel-Netzwerkeinrichtung vermittelt. Aufgrund der hardwareadressenbasierten Vermittlung ist dabei keine aufwendige Auswertung von Netzwerkadressen, wie z.B. IP-Adressen, notwendig. Als fiktive Hardware-Adresse wird in diesem Zusammenhang eine Hardware-Adreß-Information bezeichnet, die von der Ursprungs-Netzwerkeinrichtung gemäß einem verwendeten Übertragungsprotokoll zur Identifizierung eines Übermittlungsziels verwendet wird, ohne mit dessen herstellerseitig vorgegebener Hardware-Adresse - im folgenden auch als reale Hardware-Adresse bezeichnet - übereinzustimmen. Um einer fiktiven Hardware-Adresse zugeordnete Daten dennoch zur bestimmungsgemäßen, Ziel-Netzwerkeinrichtung übertragen zu können, ist eine erfindungsgemäße Adreß-Umsetzeinrichtung vorgesehen. In dieser sind fiktive Hardware-Adressen jeweils einer eine jeweilige Ziel-Netzwerkeinrichtung identifizierenden Adreßinformation zugeordnet, anhand der die Daten zur jeweiligen Ziel-Netzwerkeinrichtung vermittelt werden können.

Durch die direkte Zuordnung von fiktiven Hardware-Adressen zu Ziel-Netzwerkeinrichtungen identifizierenden Adreßinformationen in der Adreß-Umsetzeinrichtung kann eine Adressinformation auf sehr einfache Weise, z.B. durch Zugriff auf eine Zuordnungstabelle, anhand einer fiktiven Hardware-Adresse bestimmt werden. Dagegen wäre eine Bestimmung einer solchen Adreßinformation anhand einer IP-Adresse anstelle der fiktiven Hardware-Adresse wesentlich aufwendiger. Da eine IP-Adresse ein Übermittlungsziel am Ende einer Übertragungskette bezeichnet und prinzipiell jede mit einer IP-Adresse versehene Einrichtung weltweit adressiert werden könnte, ist eine direkte Zuordnung von IP-Adressen zu Ziel-Netzwerkeinrichtungen nicht sinnvoll. Im Gegensatz dazu ist die Anzahl der durch eine erfindungsgemäße Adreß-Umsetzeinrichtung zu verwaltenden fiktiven Hardware-Adressen dadurch beschränkt, daß fiktive Hardware-Adressen nur zur Adressierung von in der Ursprungs-Netzwerkeinrichtung registrierten Übermittlungszielen vorgesehen sind, so daß eine direkte Zuordnung von fiktiven Hardware-Adressen zu Adreßinformationen von Ziel-Netzwerkeinrichtungen mit geringem Speicheraufwand möglich ist.

Ein wesentlicher Vorteil der Erfindung besteht darin, daß eine hardwareadressenorientierte Vermittlung von Daten auch zu außerhalb des lokalen Netzes der Ursprungs-Netzwerkeinrichtung befindlichen Ziel-Netzwerkeinrichtungen möglich ist. Zu diesem Zweck ist einer solchen Ziel-Netzwerkeinrichtung in der Ursprungs-Netzwerkeinrichtung eine fiktive Hardware-Adresse zuzuordnen, der in der Adreß-Umsetzeinrichtung wiederum eine Adreßinformation zugeordnet wird, anhand der die Daten auch außerhalb des lokalen Netzes der Ursprungs-Netzwerkeinrichtung zur Ziel-Netzwerkeinrichtung vermittelt werden können. Auf diese Weise wird der Anwendungsbereich einer hardwareadressenorientierten Adressierung von Netzwerkeinrichtungen wesentlich erweitert.

Ein weiterer wesentlicher Vorteil der Erfindung ist darin zu sehen, daß bei einer Änderung einer realen Hardware-Adresse einer Netzwerkeinrichtung, z.B. bei einem Austausch einer Netzwerkbaugruppe, allenfalls ein geringer Rekonfigurierungsaufwand erforderlich ist. Dies ist im wesentlichen eine Konsequenz der Verwendung fiktiver Hardware-Adressen. Da diese mit keiner realen Hardware-Adresse einer Ziel-Netzwerkeinrichtung übereinstimmen müssen, können fiktive Hardware-Adressen auch bei Änderungen realer Hardware-Adressen beibehalten werden. Im Gegensatz dazu ist beim bisherigen Stand der Technik bei jeder Änderung einer realen Hardware-Adresse einer Netzwerkeinrichtung, eine Aktualisierung der Hardware-Adressen-Tabellen aller Netzwerkeinrichtungen erforderlich, denen eine Adressierung der veränderten Netzwerkeinrichtung über deren Hardware-Adresse möglich sein soll.

Vorteilhafte Ausführungsformen und Weiterbildungen der Erfindung sind in den Unteransprüchen angegeben.

Die einer fiktiven Hardware-Adresse in der Adreß-Umsetzeinrichtung zugeordnete Adreßinformation kann vorteilhafterweise eine reale Hardware-Adresse der Ziel-Netzwerkeinrichtung, z.B. deren herstellerseitig vorgegebene MAC-Adresse, sein. Einer realen Hardware-Adresse zugeordnete Daten, die zur Ziel-Netzwerkeinrichtung übertragen werden, werden von dieser als an sich adressiert erkannt und zur Weiterverarbeitung oder Weiterleitung empfangen. Falls sich die reale Hardware-Adresse der Ziel-Netzwerkeinrichtung, z.B. aufgrund eines Austausches einer Netzwerkbaugruppe, ändert, so ist nur eine Änderung der Zuordnung von realer zu fiktiver Hardware-Adresse in der Adreß-Umsetzeinrichtung notwendig, um der Ziel-Netzwerkeinrichtung durch die unveränderte fiktive Hardware-Adresse adressieren zu können.

Alternativ dazu kann den Daten als Adreßinformation auch eine Netzwerkadresse - beispielsweise eine IP-Adresse oder eine ATM-Adresse - der Ziel-Netzwerkeinrichtung zugeordnet werden. Eine solche Netzwerkadresse erlaubt auch eine Adressierung von Ziel-Netzwerkeinrichtungen, die sich in einem anderen Kommunikationsnetz als die Ursprungs-Netzwerkeinrichtung befinden.

Nach einer vorteilhaften Weiterbildung der Erfindung können eine oder mehrere als Zieladresse zu verwendende, fiktive Hardware-Adressen von der Adreß-Umsetzeinrichtung gebildet und zur Ursprungs-Netzwerkeinrichtung übermittelt werden. Fiktive Hardware-Adressen sind dabei in einer Weise zu bilden, daß sie in dem die Ursprungs-Netzwerkeinrichtung und die Adreß-Umsetzeinrichtung umfassenden lokalen Netz eindeutig sind und auch mit keiner realen Hardware-Adresse dieses lokalen Netzes übereinstimmen.

Nach einer weiteren vorteilhaften Weiterbildung der Erfindung kann eine Anfrage der Ursprungs-Netzwerkeinrichtung nach einer Hardware-Adresse einer Netzwerkeinrichtung, die durch eine in der Anfrage enthaltene Adreßinformation, z.B. eine IP-Adresse, identifiziert wird, von der Adreß-Umsetzeinrichtung stellvertretend für die betreffende Netzwerkeinrichtung beantwortet werden. Derartige Anfragen können beispielsweise im Rahmen des sogenannten ARP-Protokolls (adress resolution protocol) erfolgen. Die Adreß-Umsetzeinrichtung übermittelt dazu eine dieser Adreßinformation in der Adreß-Umsetzeinrichtung zugeordnete fiktive Hardware-Adresse an die anfragende Ursprungs-Netzwerkeinrichtung. Auf diese einfache Weise kann ein Eintragen von fiktiven Hardware-Adressen in eine zur Hardware-Adressierung benutzte Hardware-Adressen-Tabelle der Ursprungs-Netzwerkeinrichtung veranlaßt werden. Die eingetragenen fiktiven Hardware-Adressen werden dann für alle nachfolgenden Datenübermittlungen verwendet.

Gemäß einer vorteilhaften Ausführungsform der Erfindung können die zu übertragenden Daten von der Ursprungs-Netzwerkeinrichtung über die Adreß-Umsetzeinrichtung zur Ziel-Netzwerkeinrichtung übermittelt werden. Damit kann die Adreßinformation, anhand der die Daten zur Ziel-Netzwerkeinrichtung weiterzuleiten sind, bereits in der Adreß-Umsetzeinrichtung den Daten zugeordnet werden. Weiterhin können die Daten in der Adreß-Umsetzeinrichtung gemäß einem von der Ziel-Netzwerkeinrichtung verwendeten Übertragungsprotokoll umgesetzt werden. Bei der Ursprungs-Netzwerkeinrichtung ist damit zur Durchführung einer erfindungsgemäßen Datenübermittlung keine über den Rahmen einer herkömmlichen hardwareadressenorientierten Datenübermittlung hinausgehende Funktionalität notwendig. Die Ursprungs-Netzwerkeinrichtung ist lediglich an eine erfindungsgemäße Adreß-Umsetzeinrichtung anzuschließen, durch die die Ziel-Netzwerkeinrichtung adressierbar ist. Auf diese Weise können beispielsweise herkömmliche, zur direkten Verbindung von lokalen Netzen konzipierte Routereinrichtungen jeweils über eine erfindungsgemäße Adreß-Umsetzeinrichtung an ein externes Kommunikationsnetz angeschlossen und so miteinander gekoppelt werden.

Ein Ausführungsbeispiel der Erfindung wird nachfolgend anhand der Zeichnung näher erläutert.

Dabei zeigen jeweils in schematischer Darstellung
- Fig 1: drei über ein ATM-Netz gekoppelte lokale Netze und
- Fig 2: zwei Adreß-Umsetzeinrichtungen.

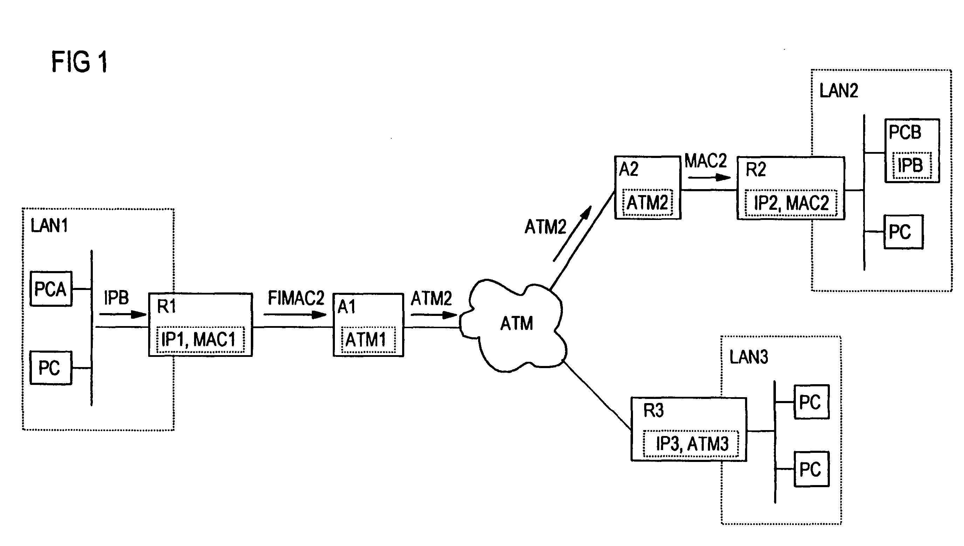

In Fig 1 sind drei über ein ATM-Netz ATM gekoppelte lokale Netze LAN1, LAN2 und LAN3 schematisch dargestellt. Die lokalen Netze LAN1, LAN2 und LAN3 umfassen jeweils mehrere, z.B. über Ethernet oder FDDI (fiber distributed data interface), lokal gekoppelte Personalcomputer PC, PCA, PCB und sind jeweils über eine Routereinrichtung R1 bzw. R2 bzw. R3 an das ATM-Netz ATM gekoppelt. Während die Routereinrichtung R1 des lokalen Netzes LAN1 und die Routereinrichtung R2 des lokalen Netzes LAN2 jeweils über eine Adreß-Umsetzeinrichtung A1 bzw. A2 an das ATM-Netz ATM angeschlossen sind, ist die Routereinrichtung R3 des lokalen Netzes LAN3 direkt mit dem ATM-Netz ATM verbunden. Die Routereinrichtungen R1 und R2 sind herkömmliche Routereinrichtungen, die eigentlich zur direkten Verbindung von lokalen Netzen konzipiert sind. Demgegenüber muß die Routereinrichtung R3 aufgrund ihres direkten Anschlusses an das ATM-Netz ATM, außer herkömmlicher Routerfunktionalität auch Mittel zur Protokollumsetzung zwischen einem im ATM-Netz ATM und einem im lokalen Netz LAN3 verwendeten Übertragungsprotokoll aufweisen. Die Routereinrichtungen R1, R2 und R3 sowie die Adreß-Umsetzeinrichtungen A1 und A2 werden im Rahmen des Ausführungsbeispiels als spezielle Konkretisierungen von Netzwerkeinrichtungen betrachtet.

Den Routereinrichtungen R1 und R2 ist in der angegebenen Reihenfolge jeweils eine MAC-Adresse MAC1 und MAC2 als reale Hardware-Adresse herstellerseitig zugeordnet sowie jeweils eine IP-Adresse IP1 bzw. IP2 per Systemadministration zugewiesen. Der Routereinrichtung R3 ist eine IP-Adresse IP3 und zusätzlich eine ATM-Adresse ATM3 als Netzwerkadresse zugewiesen. Den Adreß-Umsetzeinrichtungen A1 und A2 ist weiterhin jeweils eine ATM-Adresse ATM1 bzw. ATM2 als Netzwerkadresse zugeordnet. Dem Personalcomputer PCB ist ferner die IP-Adresse IPB zugewiesen. Die Routereinrichtungen R1, R2 und R3, die Adreß-Umsetzeinrichtungen A1 und A2 sowie der Personalcomputer PCB werden durch die jeweils zugeordneten Adressen MAC1, MAC2, IP1, IP2, IP3, IPB, ATM1, ATM2 bzw. ATM3 jeweils eindeutig identifiziert.

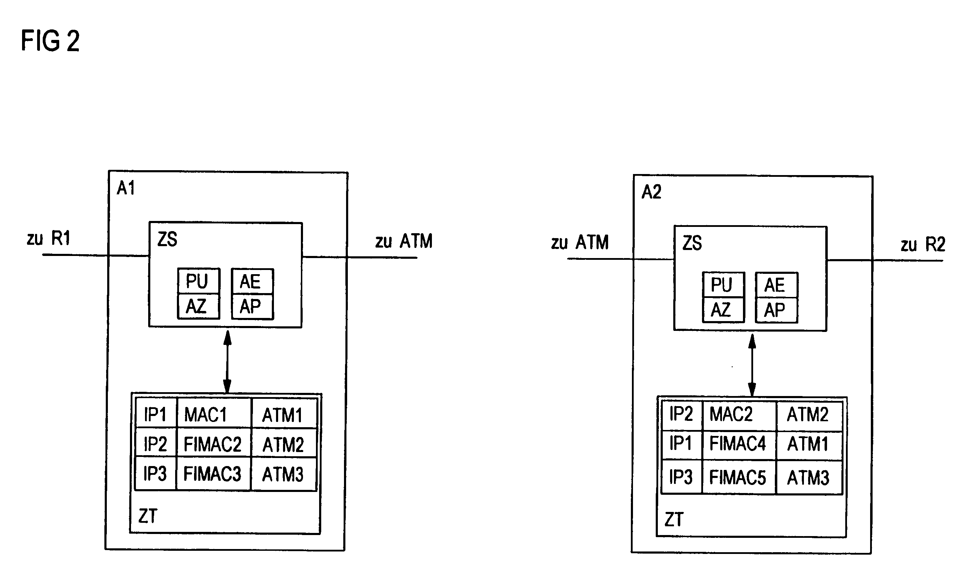

Fig 2 zeigt in schematischer Darstellung die Adreß-Umsetzeinrichtungen A1 und A2, über die die Routereinrichtungen R1 bzw. R2 an das ATM-Netz ATM gekoppelt sind. Die Adreß-Umsetzeinrichtungen A1 und A2 enthalten jeweils als Funktionskomponenten eine zentrale Steuerung ZS mit einer Protokoll-Umsetzeinrichtung PU, einer Adreß-Zuordnungseinrichtung AZ, einer Adreß-Ermittlungseinrichtung AE und einer Adreß-Prüfeinrichtung AP sowie einen Zuordnungstabellenspeicher ZT, auf den die zentrale Steuerung ZS Zugriff hat. Bei beiden Adreß-Umsetzeinrichtungen A1 und A2 ist die Protokoll-Umsetzeinrichtung PU mit der Adreß-Zuordnungseinrichtung AZ und die Adreß-Ermittlungseinrichtung AE mit der Adreß-Prüfeinrichtung AP jeweils in einer gemeinsamen Baugruppe realisiert.

Die Zuordnungstabellenspeicher ZT der Adreß-Umsetzeinrichtungen A1 und A2 enthalten in diesem Ausführungsbeipiel entsprechend der Anzahl der gekoppelten lokalen Netze LAN1, LAN2 und LAN3 jeweils mindestens drei Einträge. Der Zuordnungstabellenspeicher ZT der Adreß-Umsetzeinrichtung A1 enthält einen ersten Eintrag mit der IP-Adresse IP1, der MAC-Adresse MAC1 und der ATM-Adresse ATM1,
einen zweiten Eintrag mit der IP-Adresse IP2, einer fiktiven MAC-Adresse FIMAC2 und der ATM-Adresse ATM2 sowie
einen dritten Eintrag mit der IP-Adresse IP3, einer fiktiven MAC-Adresse FIMAC3 und der ATM-Adresse ATM3.
Der Zuordnungstabellenspeicher ZT der Adreß-Umsetzeinrichtung A2 enthält entsprechend
einen ersten Eintrag mit der IP-Adresse IP2, der MAC-Adresse MAC2 und der ATM-Adresse ATM2,
einen zweiten Eintrag mit der IP-Adresse IP1, einer fiktiven MAC-Adresse FIMAC4 und der ATM-Adresse ATM1 sowie
einen dritten Eintrag mit der IP-Adresse IP3, einer fiktiven MAC-Adresse FIMAC5 und der ATM-Adresse ATM3.
Die Elemente jedes Eintrages sind dabei jeweils einander zugeordnet gespeichert.

Die fiktiven MAC-Adressen FIMAC1, FIMAC2, FIMAC4 und FIMAC5 haben jeweils das Format einer Hardware-Adresse. Die fiktive MAC-Adresse FIMAC2 bzw. FIMAC3 wird von der Routereinrichtung R1 zur Adressierung der Routereinrichtung R2 bzw. R3 und die fiktive MAC-Adresse FIMAC4 bzw. FIMAC5 von der Routereinrichtung R2 zur Adressierung der Routereinrichtung R1 bzw. R3 verwendet. Zu diesem Zweck sind die fiktiven MAC-Adressen FIMMAC2, FIMAC3 in eine Routingtabelle (nicht dargestellt) der Routereinrichtung R1 und die fiktiven MAC-Adressen FIMAC4, FIMAC5 in eine Routingtabelle (nicht dargestellt) der Routereinrichtung R2 eingetragen. Die fiktiven MAC-Adressen FIMAC1, FIMAC2, FIMAC4 und FIMAC5 sind insofern fiktiv, als sie mit keiner der herstellerseitig vorgegebenen, realen Hardware-Adressen MAC1 bzw. MAC2 der durch sie adressierten Routereinrichtungen R1 und R2 übereinstimmen oder ihnen - wie im Fall der Routereinrichtung R3 - keine reale Hardware-Adresse zugrundeliegt. Dessenungeachtet werden die fiktiven MAC-Adressen aus Sicht der Routereinrichtungen R1 und R2 wie reale MAC-Adressen behandelt.

Die Eintragung der fiktiven MAC-Adressen FIMAC2, FIMAC3 bzw. FIMAC4, FIMAC5 in die Routingtabellen der Routereinrichtungen R1 bzw. R2 wird durch die Adreß-Umsetzeinrichtungen A1 bzw. A2 im Rahmen des sogenannten ARP-Protokolls (adress resolution protocol) veranlaßt. Im Rahmen dieses ARP-Protokolls werden Anfragen der Routereinrichtung R1 bzw. R2 nach MAC-Adressen von Netzwerkeinrichtungen von der Adreß-Umsetzeinrichtung A1 bzw. A2 stellvertretend für diese Netzwerkeinrichtungen beantwortet. Im Zuge einer solchen Anfrage wird von der anfragenden Routereinrichtung R1 bzw. R2 an die angeschlossenen Netzwerkeinrichtungen eine IP-Adresse übertragen, mit dem Auftrag, die MAC-Adresse der durch die IP-Adresse identifizierten Netzwerkeinrichtung, falls bekannt, an die Routereinrichtung R1 bzw. R2 zu senden. Beispielsweise kann so eine Anfrage nach der MAC-Adresse der durch die IP-Adresse IP2 identifizierten Routereinrichtung R2 von der Routereinrichtung R1 zur Adreß-Umsetzeinrichtung A1 übermittelt werden. Die Adreß-Umsetzeinrichtung A1 prüft in einem solchen Fall zunächst, ob die mit der Anfrage übertragene IP-Adresse, hier IP2, im Zuordnungstabellenspeicher ZT enthalten ist. Falls dies zutrifft, wird die Anfrage von der Adreß-Umsetzeinrichtung A1 durch Übersendung der dieser IP-Adresse im Zuordnungstabellenspeicher ZT zugeordneten MAC-Adresse, hier die fiktive MAC-Adresse FIMAC2, an die anfragende Routereinrichtung R1 beantwortet. Die an die Routereinrichtung R1 übermittelte fiktive MAC-Adresse FIMAC2 wird daraufhin von der Routereinrichtung R1 in deren Routingtabelle als MAC-Adresse der Routereinrichtung R2 eingetragen. Die Beantwortung von Anfragen der Routereinrichtung R2 durch die Adreß-Umsetzeinrichtung A2 verläuft analog.

Durch die stellvertretende Beantwortung solcher Anfragen durch in den Adreß-Umsetzeinrichtungen A1 bzw. A2 gespeicherte fiktive MAC-Adressen FIMAC2, FIMAC3 bzw. FIMAC4, FIMAC5 müssen die realen Hardware-Adressen MAC1, MAC2 nicht mehr in aufwendiger Weise über das Kommunikationsnetz ATM erfragt werden. Es wird ferner unnötig, bei jeder Änderung einer realen Hardware-Adresse einer über das ATM-Netz ATM angekoppelten Routereinrichtung, z.B. infolge eines Austausches einer Netzwerkbaugruppe, auch die Routingtabellen aller anderen Routereinrichtungen zu aktualisieren.

Im folgenden wird eine hardwareadressenbasierte Vermittlung von Daten zwischen den lokalen Netzen LAN1, LAN2, LAN3 am Beispiel einer Datenübermittlung vom lokalen Netz LAN1 zum lokalen Netz LAN2 betrachtet.

Zur Übermittlung von Daten von dem im lokalen Netz LAN1 befindlichen Personalcomputer PCA zu dem im lokalen Netz LAN2 befindlichen Ziel-Personalcomputer PCB werden die Daten in Form von Datenpaketen mit der IP-Adresse IPB des Ziel-Personalcomputers PCB zur Routereinrichtung R1 übermittelt. Die Routereinrichtung R1 ermittelt anhand der in ihr enthaltenen Routingtabelle, daß der durch die IP-Adresse IPB identifizierte Ziel-Personalcomputer PC2 über die Routereinrichtung R2 erreichbar ist. Die Routereinrichtung R1 versieht die zu übermittelnden Datenpakete infolgedessen mit der als Hardware-Adresse der Routereinrichtung R2 von der Adreß-Umsetzeinrichtung A1 erfragten fiktiven MAC-Adresse FIMAC2. Die IP-Adresse IPB des Ziel-Personalcomputers PCB bleibt in den Datenpaketen dabei unverändert erhalten. Die Datenpakete werden anschließend von der Routereinrichtung R1 an die Adreß-Umsetzeinrichtung A1 weitergeleitet.

In der Adreß-Umsetzeinrichtung A1 wird von der Adreß-Prüfeinrichtung AP zunächst überprüft, ob die empfangene, fiktive MAC-Adresse FIMAC2 im Zuordnungstabellenspeicher ZT enthalten ist. Falls dies zutrifft, wird von der Adreß-Ermittlungseinrichtung PE die der fiktiven MAC-Adresse FIMAC2 im Zuordnungstabellenspeicher ZT zugeordnete ATM-Adresse - hier ATM2 - bestimmt, durch die diejenige Adreß-Umsetzeinrichtung A2 identifiziert wird, über die die Routereinrichtung R2 an das ATM-Netz ATM angekoppelt ist. Die zu übermittelnden Datenpakete werden daraufhin von der Protokoll-Umsetzeinrichtung PU gemäß dem im ATM-Netz ATM verwendeten Übertragungsprotokoll in ATM-Zellen umgesetzt, denen die ATM-Adresse ATM2 von der Adreß-Zuordnungseinrichtung AZ als Netzwerkadresse zugeordnet wird. Die ATM-Zellen werden anschließend in das ATM-Netz ATM weitergeleitet und von diesem zu der durch die ATM-Adresse ATM2 identifizierten Adreß-Umsetzeinrichtung A2 übertragen. Die Übertragung kann dabei sowohl über eine oder mehrere Festverbindungen (PVC: permanent virtual circuit) als auch über eine oder mehrere bei Bedarf aufzubauende Wählverbindungen (SVC: switched virtual circuit) des ATM-Netzes ATM erfolgen.

In der Adreß-Umsetzeinrichtung A2 werden die ATM-Zellen wieder in Datenpakete gemäß IP-Protokoll umgesetzt, die mit der im Zuordnungstabellenspeicher ZT dieser Adreß-Umsetzeinrichtung A2 enthaltenen realen MAC-Adresse MAC2 der Routereinrichtung R2 versehen werden. Die Datenpakete werden anschließend zur Routereinrichtung R2 weitergeleitet, die die Datenpakete anhand der diesen zugeordneten realen MAC-Adresse MAC2 als an sich adressiert erkennt. Die Routereinrichtung R2 leitet daraufhin die empfangenen Datenpakete nach Auswertung von deren IP-Adresse IPB zu dem durch die IP-Adresse IPB identifizierten Ziel-Personalcomputer PCB weiter.

Eine Übertragung von Datenpaketen vom lokalen Netz LAN1 zu einem im lokalen Netz LAN3 befindlichen Ziel-Personalcomputer PC verläuft weitgehend analog, mit dem Unterschied, daß die Datenpakete in diesem Fall über die ATM-Adresse ATM3 direkt an die Routereinrichtung R3 adressiert werden. Die Routereinrichtung R3 muß damit sowohl Protokollumsetzfunktionalität als auch Routingfunktionalität aufweisen.

Im vorliegenden Ausführungsbeispiel sind fiktive MAC-Adressen nur für die Kommunikation zwischen einer Routereinrichtung und der jeweils direkt daran angeschlossenen Adreß-Umsetzeinrichtung wirksam. Eine Routereinrichtung bildet in diesem Zusammenhang mit der direkt daran angeschlossenen Adreß-Umsetzeinrichtung ein eigenes lokales Netz. Somit können die fiktiven MAC-Adressen FIMAC2, FIMAC3 der Adreß-Umsetzeinrichtung A1 unabhängig von den fiktiven MAC-Adressen FIMAC4, FIMAC5 der Adreß-Umsetzeinrichtung A2 verwendet werden. Insbesondere können die von der Adreß-Umsetzeinrichtung A1 verwendeten fiktiven MAC-Adressen FIMAC2 und FIMAC3 mit den von der Adreß-Umsetzeinrichtung A2 verwendeten fiktiven MAC-Adressen FIMAC4 und FIMAC5 übereinstimmen. Fiktive MAC-Adressen können damit in einer Adreß-Umsetzeinrichtung unabhängig von den fiktiven MAC-Adressen einer anderen Adreß-Umsetzeinrichtung gebildet oder durch Systemadministration zugewiesen werden.

Um einer Routereinrichtung R1 bzw. R2 eine eindeutige Adressierung von Netzwerkeinrichtungen mittels fiktiver MAC-Adressen zu ermöglichen, müssen diese innerhalb des durch Routereinrichtung und direkt daran angeschlossener Adreß-Umsetzeinrichtung gebildeten lokalen Netzes eindeutig sein. Insbesondere darf eine fiktive MAC-Adresse mit keiner realen oder anderen fiktiven MAC-Adresse im diesem lokalen Netz übereinstimmen. Dies kann beispielsweise dadurch gewährleistet werden, daß als fiktive MAC-Adressen reale MAC-Adressen von alten, nicht mehr benutzen Netzwerkeinrichtungen vergeben werden. Alternativ dazu können fiktive MAC-Adressen aus einem nur zu diesem Zweck reservierten Kontingent entnommen werden. Da sich fiktive MAC-Adressen in unterschiedlichen lokalen Netzen wiederholen dürfen, ist dazu nur ein Kontingent im Umfang einer sinnvollen Maximalgröße eines lokalen Netzes vorzusehen. Durch die genannten Maßnahmen wird sichergestellt, daß auch bei einer Änderung von realen MAC-Adressen innerhalb des lokalen Netzes, z.B. aufgrund eines Austausches einer Netzwerkbaugruppe, kein Konflikt zwischen einer fiktiven und einer realen MAC-Adresse auftritt.

## Patentansprüche

1. Verfahren zum übermittelt von Daten von einer Ursprungs-Netzwerkeinrichtung (R1) zu einer Ziel-Netzwerkeinrichtung (A2), bei dem
a) von der Ursprungs-Netzwerkeinrichtung (R1) den zu übermittelnden Daten eine fiktive Hardware-Adresse (FIMAC2) als Zieladresse zugeordnet wird, wobei als fiktive Hardware-Adresse eine Hardware-Adreß-Information bezeichnet wird, die von der Ursprungs-Netzwerkeinrichtung (R1) gemäß einem verwendeten Übertragungsprotokoll zur Identifizierung eines Ubermittlungsziels verwendet wird, ohne mit dessen herstellerseitig vorgegebener Hardware-Adresse (MAC2) übereinzustimmen,
b) die fiktive Hardware-Adresse (FIMAC2) von der Ursprungs-Netzwerkeinrichtung (R1) zu einer Adreß-Umsetzeinrichtung (A1) übermittelt wird,
c) von der Adreß-Umsetzeinrichtung (A1) geprüft wird, ob die übermittelte fiktive Hardware-Adresse (FIMAC2) mit einer in einem Speicher der Adreß-Umsetzeinrichtung (A1) gespeicherten fiktiven Hardware-Adresse (FIMAC2, FIMAC3) übereinstimmt, und bei positivem Prüfungsergebnis
d) den Daten eine der übermittelten fiktiven Hardware-Adresse (FIMAC2) in der Adreß-Umsetzeinrichtung (A1) zugeordnete, die Ziel-Netzwerkeinrichtung (A2) identifizierende Adreßinformation (ATM2) zugeordnet wird, anhand der die Daten zur Ziel-Netzwerkeinrichtung (A2) weitergeleitet werden.

2. Verfahren nach Anspruch 1,
**dadurch gekennzeichnet,**
**daß** den Daten als Adreßinformation eine reale Hardware-Adresse der Ziel-Netzwerkeinrichtung zugeordnet wird.

3. Verfahren nach Anspruch 1,
**dadurch gekennzeichnet,**
**daß** den Daten als Adreßinformation eine Netzwerkadresse (ATM2) der Ziel-Netzwerkeinrichtung (A2) zugeordnet wird.

4. Verfahren nach einem der vorhergehenden Ansprüche,
**dadurch gekennzeichnet,**
**daß** eine als Zieladresse zu verwendende, fiktive Hardware-Adresse von der Adreß-Umsetzeinrichtung (A1) gebildet und zur Ursprungs-Netzwerkeinrichtung (R1) übermittelt wird.

5. Verfahren nach einem der vorhergehenden Ansprüche,
**dadurch gekennzeichnet,**
**daß** eine Anfrage der Ursprungs-Netzwerkeinrichtung (R1) nach einer Hardware-Adresse einer durch eine in der Anfrage enthaltene Adreßinformation identifizierten Netzwerkeinrichtung von der Adreß-Umsetzeinrichtung (A1) dergestalt beantwortet wird, daß
von der Adreß-Umsetzeinrichtung (A1) eine der betreffenden Adreßinformation zugeordnete, fiktive Hardware-Adresse an die Ursprungs-Netzwerkeinrichtung (R1) übermittelt wird.

6. Verfahren nach Anspruch 5,
**dadurch gekennzeichnet,**
**daß** die in der Anfrage enthaltene Adreßinformation eine Netzwerkadresse ist.

7. Verfahren nach einem der vorhergehenden Ansprüche,
**dadurch gekennzeichnet,**
**daß** als Hardware-Adresse eine MAC-Adresse verwendet wird.

8. Verfahren nach einem der vorhergehenden Ansprüche,
**dadurch gekennzeichnet,**
**daß** die Daten von der Ursprungs-Netzwerkeinrichtung (R!) zur Ziel-Netzwerkeinrichtung (A2) über die Adreß-Umsetzeinrichtung (A1) übermittelt werden, wo den Daten die der übermittelten fiktiven Hardware-Adresse (FIMAC2) zugeordnete Adreßinformation (ATM2) zugeordnet wird.

9. Verfahren nach Anspruch 8,
**dadurch gekennzeichnet,**
**daß** die Daten in der Adreß-Umsetzeinrichtung (A1) gemäß einem von der Ziel-Netzwerkeinrichtung (A2) verwendeten übertragungsprotokoll umgesetzt werden.

10. Adreß-Umsetzeinrichtung (A1) zum Umsetzen von fiktiven Hardware-Adressen (FIMAC2, FIMAC3) in mindestens eine Ziel-Netzwerkeinrichtung (A2, R3) identifizierende Adreßinformationen (ATM2, ATM3), wobei als fiktive Hardware-Adresse eine Hardware-Adreß-Information bezeichnet wird, die von einer Ursprungs-Netzwerkeinrichtung (R1) gemäß einem verwendeten Übertragungsprotokoll zur Identifizierung eines Übermittlungsziels verwendet wird, ohne mit dessen herstellerseitig vorgegebener Hardware-Adresse (MAC2) übereinzustimmen, mit
a) einem Zuordnungstabellenspeicher (ZT), in dem mindestens eine fiktive Hardware-Adresse (FIMAC2, FIMAC3) jeweils einer eine Ziel-Netzwerkeinrichtung (A2, R3) identifizierenden Adreßinformation (ATM2, ATM3) zugeordnet gespeichert ist,
b) einer Adreß-Prüfeinrichtung (AP) zum Prüfen, ob eine von der Ursprungs-Netzwerkeinrichtung (R1) kommende, fiktive Hardware-Adresse (FIMAC2) mit einer im Zuordnungstabellenspeicher (ZT) enthaltenen, fiktiven Hardware-Adresse (FIMAC2, FIMAC3) übereinstimmt, und
c) einer Adreß-Ermittlungseinrichtung (AE) zum Ermitteln der einer von der Ursprungs-Netzwerkeinrichtung (R1) kommenden und im Zuordnungstabellenspeicher (ZT) enthaltenen, fiktiven Hardware-Adresse (FIMAC2) zugeordneten Adreßinformation (ATM2).

11. Adreß-Umsetzeinrichtung nach Anspruch 10,
**gekennzeichnet durch**
eine Adreß-Zuordnungseinrichtung (AZ) zum Zuordnen von von der Ursprungs-Netzwerkeinrichtung (R1) kommenden, einer jeweiligen fiktiven Hardware-Adresse zugeordneten Daten zu einer der jeweiligen fiktiven Hardware-Adresse im Zuordnungstabellenspeicher (ZT) zugeordneten Adreßinformation.

12. Adreß-Umsetzeinrichtung nach Anspruch 11,
**gekennzeichnet durch**
eine Protokoll-Umsetzeinrichtung (PU) zum Umsetzen der von der Ursprungs-Netzwerkeinrichtung (R1) kommenden Daten gemäß einem von der Ziel-Netzwerkeinrichtung (A2) verwendeten übertragungsprotokoll.

13. Adreß-Umsetzeinrichtung nach einem der Ansprüche 10 bis 12,
**gekennzeichnet durch**
eine Einrichtung zum Bilden von als Zieladressen zu verwendenden, fiktiven Hardware-Adressen.

14. Adreß-Umsetzeinrichtung nach einem der Ansprüche 10 bis 13,
**gekennzeichnet durch**
eine Adreß-Auflösungseinrichtung zum Beantworten von Anfragen der Ursprungs-Netzwerkeinrichtung (R1) nach einer Hardware-Adresse einer Netzwerkeinrichtung, die **durch** eine in der Anfrage enthaltene Adreßinformation identifiziert wird, **durch** Aufsuchen der dieser im Zuordnungstabellenspeicher (ZT) zugeordneten fiktiven Hardware-Adresse und deren Übermittlung zur Ursprungs-Netzwerkeinrichtung (R1).

15. Adreß-Umsetzeinrichtung nach einem der Ansprüche 10 bis 14,
**gekennzeichnet durch**
Mittel zum Eintragen von Adreßinformationen in den Zuordnungstabellenspeicher (ZT).

## Claims

1. Method for transmitting data from a source network device (R1) to a destination network device (A2), in which
a) the source network device (R1) assigns the data to be transmitted a fictitious hardware address (FIMAC2) as destination address, the fictitious hardware address being referred to as a hardware address information item which the source network device (R1) uses, on the basis of a transfer protocol used, to identify a transmission destination without matching the latter's hardware address (MAC2) prescribed by the manufacturer,
b) the fictitious hardware address (FIMAC2) is transmitted from the source network device (R1) to an address conversion device (A1),
c) the address conversion device (A1) checks whether the fictitious hardware address (FIMAC2) transmitted matches a fictitious hardware address (FIMAC2, FIMAC3) stored in a memory of the address conversion device (A1), and, if the result of the check is positive,
d) the data are assigned an address information item (ATM2) which is associated with the transmitted fictitious hardware address (FIMAC2) in the address conversion device (A1), identifies the destination network device (A2) and is used to forward the data to the destination network device (A2).

2. Method according to Claim 1,
**characterized**
**in that** the address information item assigned to the data is a real hardware address for the destination network device.

3. Method according to Claim 1,
**characterized**
**in that** the address information item assigned to the data is a network address (ATM2) for the destination network device (A2).

4. Method according to one of the preceding claims,
**characterized**
**in that** a fictitious hardware address to be used as destination address is formed by the address conversion device (A1) and is transmitted to the source network device (R1).

5. Method according to one of the preceding claims,
**characterized**
**in that** an enquiry from the source network device (R1) after a hardware address for a network device identified by an address information item contained in the enquiry is answered by the address conversion device (A1) such that
the address conversion device (A1) transmits a fictitious hardware address associated with the address information item in question to the source network device (R1).

6. Method according to Claim 5,
**characterized**
**in that** the address information item contained in the enquiry is a network address.

7. Method according to one of the preceding claims,
**characterized**
**in that** the hardware address used is an MAC address.

8. Method according to one of the preceding claims,
**characterized**
**in that** the data are transmitted from the source network device (R1) to the destination network device (A2) via the address conversion device (A1), where the data are assigned the address information item (ATM2) associated with the transmitted fictitious hardware address (FIMAC2).

9. Method according to Claim 8,
**characterized**
**in that** the data are converted in the address conversion device (A1) in line with a transfer protocol used by the destination network device (A2).

10. Address conversion device (A1) for converting fictitious hardware addresses (FIMAC2, FIMAC3) into address information items (ATM2, ATM3) identifying at least one destination network device (A2, R3), where the fictitious hardware address referred to is a hardware address information item which a source network device (R1) uses, on the basis of a transfer protocol used, to identify a transmission destination without matching the latter's hardware address (MAC2) prescribed by the manufacturer, having
a) an association table memory (ZT) in which at least one fictitious hardware address (FIMAC2, FIMAC3) is stored associated with a respective address information item (ATM2, ATM3) which identifies a destination network device (A2, R3)
b) an address checking device (AP) for checking whether a fictitious hardware address (FIMAC2) coming from the source network device (R1) matches a fictitious hardware address (FIMAC2, FIMAC3) held in the association table memory (ZT), and
c) an address determination device (AE) for determining the address information item (ATM2) associated with a fictitious hardware address (FIMAC2) which comes from the source network device (R1) and is held in the association table memory (ZT).

11. Address conversion device according to Claim 10,
**characterized by**
an address assignment device (AZ) for assigning data which come from the source network device (R1) and are associated with a respective fictitious hardware address to an address information item associated with the respective fictitious hardware address in the association table memory (ZT).

12. Address conversion device according to Claim 11,
**characterized by**
a protocol conversion device (PU) for converting the data coming from the source network device (R1) in line with a transfer protocol used by the destination network device (A2).

13. Address conversion device according to one of Claims 10 to 12,
**characterized by**
a device for forming fictitious hardware addresses to be used as destination addresses.

14. Address conversion device according to one of Claims 10 to 13,
**characterized by**
an address resolution device for answering enquiries from the source network device (R1) after a hardware address for a network device, which is identified by an address information item contained in the enquiry, by looking up the fictitious hardware address associated with said address information item in the association table memory (ZT) and transmitting it to the source network device (R1).

15. Address conversion device according to one of Claims 10 to 14,
**characterized by**
means for entering address information items into the association table memory (ZT).

## Revendications

1. Procédé pour la transmission de données d'un dispositif de réseau d'origine (R1) à un dispositif de réseau cible (A2), dans lequel
a) une adresse de matériel fictive (FIMAC2) est attribuée comme adresse cible par le dispositif de réseau d'origine (R1) aux données à transmettre, une information d'adresse de matériel étant désignée comme adresse de matériel fictive, laquelle information est utilisée par le dispositif de réseau d'origine (R1) selon un protocole de transmission utilisé pour l'identification d'une cible de transmission, sans concorder avec l'adresse de matériel (MAC2), prédéfinie côté constructeur, de cette cible,
b) l'adresse de matériel fictive (FIMAC2) est transmise par le dispositif de réseau d'origine (R1) à un dispositif de conversion d'adresse (A1),
c) le dispositif de conversion d'adresse (A1) vérifie si l'adresse de matériel fictive (FIMAC2) transmise coïncide avec une adresse de matériel fictive (FIMAC2, FIMAC3) stockée dans une mémoire du dispositif de conversion d'adresse (A1), et en cas de résultat positif du contrôle,
d) une information d'adresse (ATM2) attribuée à l'adresse de matériel (FIMAC2) fictive transmise dans le dispositif de conversion d'adresse (A1) et identifiant le dispositif de réseau cible (A2) est attribuée aux données, information à l'aide de laquelle les données sont acheminées au dispositif de réseau cible (A2).

2. Procédé selon la revendication 1,
**caractérisé en ce qu'**
une adresse de matériel réelle du dispositif de réseau cible est attribuée aux données comme information d'adresse.

3. Procédé selon la revendication 1,
**caractérisé en ce qu'**
une adresse de réseau (ATM2) du dispositif de réseau cible (A2) est attribuée aux données comme information d'adresse.

4. Procédé selon l'une quelconque des revendications précédentes,
**caractérisé en ce qu'**
une adresse de matériel fictive, à utiliser comme adresse cible, est formée par le dispositif de conversion d'adresse (A1) et est transmise au dispositif de réseau d'origine (R1).

5. Procédé selon l'une quelconque des revendications précédentes,
**caractérisé en ce qu'**
une demande du dispositif de réseau d'origine (R1) reçoit une réponse du dispositif de conversion d'adresse (A1) selon une adresse de matériel d'un dispositif de réseau identifié par une adresse d'information contenue dans la demande de telle sorte que le dispositif de conversion d'adresse (A1) transmet une adresse de matériel fictive, attribuée à l'information d'adresse concernée, au dispositif de réseau d'origine (R1).

6. Procédé selon la revendication 5,
**caractérisé en ce que**
l'information d'adresse contenue dans la demande est une adresse de réseau.

7. Procédé selon l'une quelconque des revendications précédentes,
**caractérisé en ce qu'**
une adresse MAC est utilisée comme adresse de matériel.

8. Procédé selon l'une quelconque des revendications précédentes,
**caractérisé en ce que**
les données sont transmises par le dispositif de réseau d'origine (R1) au dispositif de réseau cible (A2) par l'intermédiaire du dispositif de conversion d'adresse (A1), où l'information d'adresse (ATM2) attribuée à l'adresse de matériel fictive (FIMAC2) transmise est attribuée aux données.

9. Procédé selon la revendication 8,
**caractérisé en ce que**
les données sont converties dans le dispositif de conversion d'adresse (A1) selon un protocole de transmission utilisé par le dispositif de réseau cible (A2).

10. Dispositif de conversion d'adresse (A1) pour la conversion d'adresses de matériel fictives (FIMAC2, FIMAC3) en informations d'adresse (ATM2, ATM3) identifiant au moins un dispositif de réseau cible (A2, R3), une information d'adresse de matériel étant désignée par adresse de matériel fictive, laquelle information est utilisée par un dispositif de réseau d'origine (R1) selon un protocole de transmission utilisé pour l'identification d'une cible de transmission, sans coïncider avec l'adresse de matériel (MAC2) prédéfinie par le constructeur de cette cible, comprenant
a) une mémoire de tableaux d'attribution (ZT), dans laquelle au moins une adresse de matériel fictive (FIMAC2, FIMAC3) est stockée, attribuée respectivement à une information d'adresse (ATM2, ATM3) identifiant un dispositif de réseau cible (A2, R3),
b) un dispositif de contrôle d'adresse (AP) pour contrôler si une adresse de matériel (FIMAC2) fictive, arrivant du dispositif de réseau d'origine (R1), coïncide avec une adresse de matériel (FIMAC2, FIMAC3) fictive, contenue dans la mémoire de tableaux d'attribution (ZT), et
c) un dispositif de détermination d'adresse (AE) pour déterminer l'information d'adresse (ATM2) attribuée à une adresse de matériel fictive (FIMAC2) arrivant du dispositif de réseau d'origine (R1) et contenue dans la mémoire de tableaux d'attribution (ZT).

11. Dispositif de conversion d'adresse selon la revendication 10,
**caractérisé par**
un dispositif d'attribution d'adresse (AZ) pour l'attribution de données arrivant du dispositif de réseau d'origine (R1), attribué à une adresse de matériel fictive respective, à une information d'adresse attribuée à l'adresse de matériel fictive respective dans la mémoire de tableaux d'attribution (ZT).

12. Dispositif de conversion d'adresse selon la revendication 11,
**caractérisé par**
un dispositif de conversion de protocole (PU) pour la conversion des données arrivant du dispositif de réseau d'origine (R1) selon un protocole de transmission utilisé par le dispositif de réseau cible (A2).

13. Dispositif de conversion d'adresse selon l'une quelconque des revendications 10 à 12,
**caractérisé par**
un dispositif pour la formation d'adresses de matériel fictives à utiliser comme adresses cibles.

14. Dispositif de conversion d'adresse selon l'une quelconque des revendications 10 à 13,
**caractérisé par**
un dispositif de résolution d'adresse pour répondre à des demandes du dispositif de réseau d'origine (R1) selon une adresse de matériel d'un dispositif de réseau, qui est identifié par une information de l'adresse contenue dans la demande, par la recherche d'adresse de matériel fictive attribuée à cette information dans la mémoire de tableaux d'attribution (ZT) et la transmission de cette adresse au dispositif de réseau d'origine (R1).

15. Dispositif de conversion d'adresse selon l'une quelconque des revendications 10 à 14,
**caractérisé par**
des moyens pour l'inscription d'informations d'adresse dans la mémoire de tableaux d'attribution (ZT).
